# EUROPEAN PATENT APPLICATION

(11) **EP 4 766 028 A1**
(43) Date of publication of application: **24.06.2026**
(21) Application number: 25187063.0
(22) Date of filing: 02.07.2025
(51) Int. Cl.: H05B 47/155, G09F 9/30, G09F 13/00, H05B 47/19, G06T 13/00

(54) **MARQUEE ANIMATION DISPLAY METHOD FOR STRING LIGHT CONTROL PROGRAM AND TERMINAL**

(30) Priority: 18.12.2024 CN 202411869492
(71) Applicant: Agzzx Optoelectronics Technology Co., Ltd, Fuzhou Fujian (CN)
(72) Inventor: Lin, Fufei, Pingtan County, Fujian Province (CN); Xiong, Xinyue, Zhuzhou City, Hunan Province (CN)
(74) Representative: Plavsa, Olga

(57) **Abstract**

The present invention provides a marquee animation display method for a string light control program, as well as a corresponding terminal. The method comprises the following steps: S1: Shape generator generates multiple light bead graphics, which together form a string light graphic; S2: Animation generator generates keyframe animations; S3: Light bead graphics are bound to the keyframe animations, and the string light graphic is added to the display view to present marquee animation effect. This marquee animation display method enhances the efficiency and smoothness of marquee animation rendering, reduces the performance consumption of the terminal device running the string light control program, and improves the user experience.

## Description

### Technical Field

The present invention relates to the field of display control technologies, and more particularly, to a marquee animation display method for a string light control program and a terminal.

### Background

Smart Bluetooth string lights are lighting products that can be controlled via Bluetooth technology and are widely used in various scenarios, including home decoration, stage performances, and holiday celebrations. Users can control the string lights through a string light control program on a terminal device. This control program not only displays animation effects on the terminal device, but also synchronously controls the Bluetooth string lights to display the same animation effects.

Conventional string light control programs calculate the color or position of each light bead in real time based on animation logic and parameters during playback. This process requires significant computational resources, especially when handling complex animations or displaying multiple animations simultaneously. Consequently, it may cause the terminal device to overheat, lag, or even crash. The high resource consumption during runtime not only reduces animation fluency but may also shorten the terminal device's battery life, thereby negatively impacting the user experience when controlling Bluetooth string lights to display marquee animations.

### Summary

The technical problem to be solved by the present invention is to provide a marquee animation display method for a Bluetooth string light control program, to address the issue of high-resource consumption in existing string light control programs when controlling Bluetooth string lights to display animation effects.

To solve the above problem, the technical solution adopted in the present invention is as follows: A marquee animation display method for a string light control program is provided, which comprises the following steps:
S1: Shape generator generates a plurality of light bead graphics, which together form a string light graphic;
S2: Animation generator generates a keyframe animation;
S3: Light bead graphics are bound to the keyframe animation, and the string light graphic is added to a display view to present a marquee animation effect of the string light graphic.

In a further embodiment, in step S1, the shape generator generates a plurality of light bead graphics, which together form a string light graphic, comprising the following steps:
S11: Acquiring preset graphic data;
S12: Generating, according to the preset graphic data, a plurality of light bead graphic objects respectively corresponding to the light bead graphics, and storing the light bead graphics in a light bead graphic array.

In a further embodiment, the preset graphic data comprises a plurality of light bead parameters respectively corresponding to the plurality of light bead graphics, wherein the light bead parameters include position parameters and shape parameters:
In step S12, a plurality of light bead graphic objects are generated according to the preset graphic data and stored in the light bead graphic array, specifically comprising the following steps:
S121: Creating the light bead graphic array;
S122: Obtaining a scaling factor based on the size of the preset view and the size of the display view;
S123: Traversing the light bead parameters and generating light bead graphic objects according to the scaling factor and the light bead parameters, and storing the light bead graphic objects in the light bead graphic array.

In a further embodiment, the preset graphic data further comprises background parameters;
Step S1 further comprises the step: generating a background graphic object based on the background parameters;
Step S3 further comprises the step: adding the background graphic object to the display view to display the overall shape of the string light controlled by the string light control program.

In a further embodiment, in step S2, the animation generator generates the keyframe animation, specifically comprising the following steps:
S21: Creating the keyframe animation, wherein the key path of the keyframe animation is set to "fillColor" to control color changes of the light bead graphics;
S22: Creating a keyframe array for storing keyframe elements, wherein the keyframe elements comprise bead colors and the number of consecutive occurrences of each bead color;
S23: The keyframe animation is configured with a plurality of keyframes, wherein each keyframe corresponds to a respective one of the plurality of keyframe elements.

In a further embodiment, in step S23, the keyframe animation is configured with a plurality of keyframes, each of which corresponds to a respective keyframe element of the plurality of keyframe elements, specifically comprising:
S231: Traversing the keyframe elements in the keyframe array to acquire the total number of color occurrences, and calculating a total animation duration based on a preset bead animation duration and the total number of occurrences;
S232: Acquiring a keyframe corresponding to each keyframe element based on the number of consecutive occurrences of the bead color.

In a further embodiment, in step S3, binding the light bead graphics to the keyframe animation and adding the string light graphic to the display view to present the marquee animation effect of the string light graphic, specifically comprising the following steps:
S31: Applying the keyframe animation to all the light bead graphics;
S32: Adding the string light graphic to the display view, so that all the light bead graphics generate animation effects based on the keyframe animation.

In a further embodiment, in step S31, applying the keyframe animation to all the light bead graphics, specifically comprising:
Traversing the light bead graphics forming the string light graphic, and setting the animation start time of each traversed light bead graphic based on its traversal index and the duration of the bead animation in the keyframe animation.

In a further embodiment, in step S31, applying the keyframe animation to all the light bead graphics further comprises the step: setting a traversal order based on the direction of the marquee animation, traversing the light bead graphics forming the string light graphic according to the traversal order.

Another objective of the present invention is to provide a string light control terminal, comprising a memory, a processor, and a string light control program stored on the memory and executable by the processor. When executing the string light control program, the processor implements the above-described marquee animation display method, which comprises the following steps:
S1: Generating a plurality of light bead graphics by a shape generator, wherein the plurality of light bead graphics form a string light graphic;
S2: Generating a keyframe animation by an animation generator;
S3: Binding the light bead graphics to the keyframe animation, and adding the string light graphic to a display view to present a marquee animation effect of the string light graphic.

In a further embodiment, in step S2, the animation generator generates a keyframe animation, specifically comprising the following steps:
S21: Creating the keyframe animation, wherein the key path of the keyframe animation is set to "fillColor" to control color changes of the light bead graphics;
S22: Creating a keyframe array for storing keyframe elements, wherein the keyframe elements comprise bead colors and the number of consecutive occurrences of each bead color;
S23: Setting the keyframe animation with a plurality of keyframes respectively corresponding to the plurality of keyframe elements.

The present invention offers the following beneficial effects: the proposed marquee animation display method utilizes a shape generator to create multiple light bead graphics, which together form the shape of a string light graphic. A unified animation effect is then generated by an animation generator to simultaneously control the color changes of all the light bead graphics, enabling a dynamic animation effect for the string light graphic. This approach optimizes the performance of the string light control program by avoiding the need to compute the animation of each light bead in real time. As a result, the method significantly improves the efficiency and smoothness of the marquee animation display, reduces the performance consumption of the terminal device running the control program, and enhances the user experience.

### Brief Description of the Drawings

FIG. 1 is a flowchart illustrating the steps of the marquee animation display method of the string light control program according to the present invention;
FIG. 2 is a structural diagram of the string light control terminal according to the present invention.

### Detailed Description

To describe the technical content, objectives, and effects of the present invention in detail, the following embodiments are provided in conjunction with the accompanying drawings.

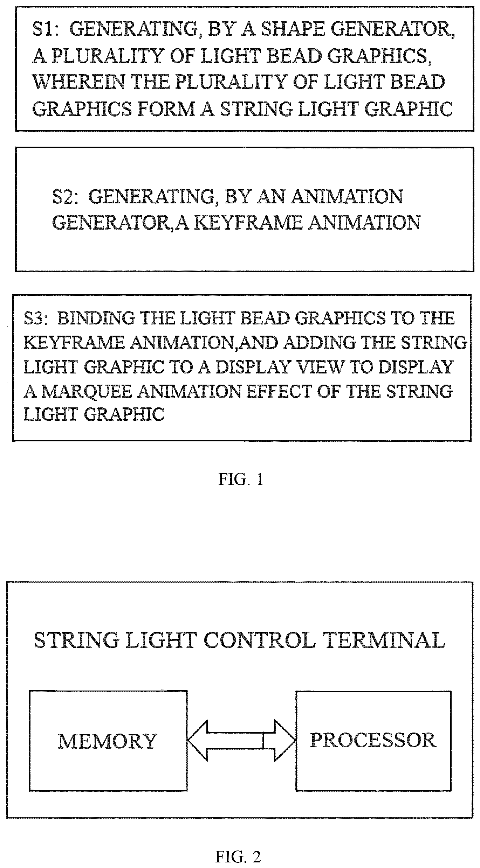

Referring to FIG.1 and FIG.2, the present invention provides a marquee animation display method for a string light control program, which comprises the following steps:
S1: Shape generator generates a plurality of light bead graphics, wherein the plurality of light bead graphics form a string light graphic;
S2: Animation generator generates a keyframe animation;
S3: Light bead graphics are bound to the keyframe animation, and the string light graphic is added to a display view to present a marquee animation effect of the string light graphic.

As described above, the present invention has the following advantages: the proposed marquee animation display method allows the shape generator to create multiple light bead graphics that form the overall shape of the string light graphic. A unified animation effect is generated by the animation generator to simultaneously control the color changes of all the light bead graphics, thereby enabling the string light graphic to achieve a dynamic animation effect. At the same time, this method optimizes the performance of the string light control program by eliminating the burden of calculating the animation of each light bead in real time. As a result, the method improves the efficiency and smoothness of the marquee animation display, reduces the performance consumption of the terminal device running the string light control program, and enhances the user experience.

In a further embodiment, in step S1, the shape generator generates a plurality of light bead graphics that collectively form a string light graphic, specifically comprising the following steps:
S11: Acquiring preset graphic data;
S12: Generating, according to the preset graphic data, a plurality of light bead graphic objects respectively corresponding to the light bead graphics, and storing the light bead graphics in a light bead graphic array.

In a further embodiment, the preset graphic data comprises a plurality of bead parameters, each corresponding to a respective light bead graphic, wherein the bead parameters include position parameters and graphic parameters;

In step S12, a plurality of light bead graphic objects are generated based on the preset graphic data, and the generated light bead graphic objects are stored in a bead graphic array, specifically comprising:
S121: Creating the light bead graphic array;
S122: Obtaining a scaling factor based on the size of the view in the preset graphic data and the size of the display view;
S123: Traversing the bead parameters and generating light bead graphic objects based on the scaling factor and the bead parameters, and storing the light bead graphic objects in the light bead graphic array.

From the above description, it can be seen that the shape generator is capable of generating a plurality of light bead graphic objects based on the preset graphic data, each corresponding to a light bead graphic. These objects are stored in a light bead graphic array. The display view is capable of rendering a plurality of light bead graphics based on the array, and filling each graphic with a corresponding color, thereby forming a complete string light graphic composed of multiple light bead graphics.

In a further embodiment, the preset graphic data further comprises background parameters;
Step S1 further comprises the step: generating a background graphic object based on the background parameters;
Step S3 further comprises the step: adding the background graphic object to the display view, to display the overall shape of the string light controlled by the string light control program within the display view.

From the above description, it can be seen that the display view is capable of displaying the shape of the string light based on the background graphic object, and is also capable of displaying the layout position and size of each light bead based on the light bead graphic array, as well as presenting the color of each light bead in the string light graphic.

In a further embodiment, in step S2, the animation generator generates a keyframe animation. This process specifically comprises the following steps:
S21: Creating the keyframe animation, wherein the key path of the keyframe animation is set to "fillColor" to control color changes of the light bead graphics;
S22: Creating a keyframe array for storing keyframe elements, wherein each keyframe element comprises a bead color and the number of consecutive occurrences of that bead color;
S23: Setting the keyframe animation with a plurality of keyframes respectively corresponding to the plurality of keyframe elements.

From the above description, it can be seen that the method of the present invention fills colors into the light bead graphics based on the keyframe animation, so as to present an animation effect in which the light bead graphics sequentially display different colors. Each keyframe element corresponds to the display of a specific bead color, and the light bead graphics change color at the corresponding keyframe to achieve a smooth transition animation effect.

In a further embodiment, in step S23, the keyframe animation setting comprises a plurality of keyframes respectively corresponding one-to-one to a plurality of keyframe elements, specifically comprising the following steps:
S231: Traversing the keyframe elements in the keyframe array to obtain the total number of color occurrences, and calculating a total animation duration based on a preset bead animation duration and the total number of color occurrences;
S232: Acquiring the keyframe corresponding to each keyframe element based on the number of consecutive occurrences of the corresponding bead color.

From the above description, it can be seen that the method provided by the present invention calculates the total animation duration by traversing the keyframe elements in the keyframe array and determines the corresponding keyframes based on the animation duration and the keyframe elements.

In a further embodiment, in step S3, the light bead graphics are bound to the keyframe animation, and the string light graphic is added to the display view to present the marquee animation effect of the string light graphic, specifically comprising the following steps:
S31: Applying the keyframe animation to all the light bead graphics;
S32: Adding the string light graphic to the display view, so that all the light bead graphics generate animation effects based on the keyframe animation.

From the above description, it can be seen that all the light bead graphics are bound to the keyframes corresponding to their respective colors in the keyframe animation. All the light bead graphics in the string light graphic can share the same keyframe animation, and the animation effect of each light bead graphic is consistent, with only the animation start time differing. This reduces memory usage and performance consumption of the string light control program.

In a further embodiment, in step S31, animation effects are added to all of the light bead graphics based on the keyframe animation, specifically comprising:

Traversing the light bead graphics forming the string light graphic, and setting an animation start time for each traversed light bead graphic based on its traversal index and the duration of the bead animation in the keyframe animation.

From the above description, it can be seen that the method provided by the present invention sets a time difference in animation start times between adjacent light bead graphics. For example, the animation start times of two adjacent light bead graphics may differ by one bead animation duration. In this manner, the light bead graphics light up sequentially in the preset bead colors, forming a marquee animation effect with a continuously moving string light graphic.

In a further embodiment, in step S31, applying the keyframe animation to all the light bead graphics further comprises the step: setting a traversal order based on the direction of the marquee animation, and traversing the light bead graphics forming the string light graphic according to the traversal order.

From the above description, it can be seen that the marquee animation display method provided by the present invention is capable of producing both forward and reverse animation effects.

Another objective of the present invention is to provide a string light control terminal, which comprises a memory, a processor, and a string light control program stored in the memory and executable by the processor. When the processor executes the string light control program, it implements the above-described marquee animation display method, comprising the following steps:
S1: Shape generator generates a plurality of light bead graphics, wherein the plurality of light bead graphics form a string light graphic;
S2: Animation generator generates a keyframe animation;
S3: Light bead graphics are bound to the keyframe animation, and the string light graphic is added to a display view to present a marquee animation effect.

In a further embodiment, in step S2, the animation generator generates the keyframe animation, specifically comprising the following steps:
S21: Creating the keyframe animation, wherein the key path of the keyframe animation is set to "fillColor" to control color changes of the light bead graphics;
S22: Creating a keyframe array for storing keyframe elements, wherein each keyframe element comprises a bead color and the number of consecutive occurrences of that bead color;
S23: Setting the keyframe animation with a plurality of keyframes respectively corresponding to the plurality of keyframe elements.

### Embodiment 1

Referring to FIG. 1 and FIG. 2, a first embodiment of the present invention provides a marquee animation display method for string light control software, aiming to address the issue of high resource consumption in existing string light control programs when displaying animation effects on Bluetooth string lights.

Specifically, the marquee animation display method provided in this embodiment comprises S1: shape generator generates a plurality of light bead graphics, wherein the plurality of light bead graphics form a string light graphic.

In this embodiment, the shape generator is configured to generate string light graphics in different shapes based on user selection, such as Christmas tree lights, Eave lights, and Fence lights.

Step S1 comprises the following steps:
S11: Acquiring the preset graphic data.

First, the user can select a shape enumeration value through the string light control program, for example, "Christmas Tree." The control program then obtains preset graphic data corresponding to the selected shape enumeration value.

The preset graphic data includes background parameters and a plurality of bead parameters, respectively corresponding to the light bead graphics. The bead parameters include position parameters and shape parameters.

S12: Generating a background graphic object based on the background parameters; generating a plurality of light bead graphic objects respectively corresponding to the light bead graphics based on the preset graphic data, and storing the light bead graphic objects in a light bead graphic array.

In this embodiment, after acquiring the preset graphic data, the shape generator may use the CAShapeLayer to draw the background graphic according to the background parameters. The CAShapeLayer serves as a drawing container and displays the overall shape of the string light by adding a background image. A background graphic object is thus generated, allowing the display view to present the overall shape of the string light based on the background graphic object.

In step S12 of this embodiment, a plurality of light bead graphic objects are generated according to the preset graphic data, each object corresponding one-to-one with the plurality of light bead graphics, wherein the plurality of light bead graphics are stored in a light bead graphic array, specifically comprising the following steps:
S121: Creating the light bead graphic array. First, a light bead graphic array is created to store each light bead graphic object. In this embodiment, the shape generator may use CAShapeLayer to draw individual bead graphics based on the bead data. Therefore, each light bead graphic object can be a CAShapeLayer object, and the array is used to store multiple CAShapeLayer instances.
S122: Obtaining a scaling factor based on the size of the view in the preset graphic data and the size of the display view. The scaling factor is used to adjust the position and size of the generated light bead graphic objects so that the string light graphic can fit within the display area of the display view when added.
S123: Traversing the bead parameters, and generating light bead graphic objects based on the scaling factor and the bead parameters; storing the light bead graphic objects in the light bead graphic array. The position and shape parameters corresponding to the bead graphics are scaled according to the size of the display view, resulting in view-position parameters and view-shape parameters of the bead graphics on the display view. This ensures that each light bead graphic can be correctly rendered in the display view.

In this embodiment, the light bead graphics can be rendered according to the following steps: Based on the shape parameters and position parameters of each light bead graphic object, a circular vector path is created for each light bead graphic using the CGPathCreateWithEllipseInRect method. This path visually defines the shape of the light bead graphic. The "fillColor" property of each light bead graphic object is set to the corresponding bead color to ensure that each light bead graphic displays the correct color.

Through the above steps S11 to S12, the shape generator can generate a background graphic object and a light bead graphic array containing all the light bead graphics. These graphic objects are used for subsequent animation rendering and visual effects.

The marquee animation display method provided in this embodiment further comprises step S2: the animation generator generates a keyframe animation.

The animation generator is responsible for generating a unified animation effect for the entire marquee animation. In this embodiment, the animation generator utilizes the values property of CAKeyframeAnimation to control the color transitions of the light bead graphics. By controlling the sequential color changes of the bead graphics, the marquee animation effect is achieved. In this embodiment, for each color to be displayed on the light bead graphics, the keyframe animation assigns a keyframe element, and keyframes are set according to these elements. This allows the light bead graphics to change colors at specific keyframes, thereby producing the marquee animation effect for the string light graphic.

Step S2 comprises the following steps:
S21: Creating the keyframe animation, wherein the key path of the keyframe animation is set to "fillColor" to control the color changes of the light bead graphics.

In this embodiment, the animation generator creates a keyframe animation using CAKeyframeAnimation. The keyPath attribute is set to "fillColor" to control the transition of bead colors. To ensure that the color changes are smooth and continuous, the repeatCount of the keyframe animation is set to "HUGE VALF", enabling the animation to loop continuously.

S22: Creating a keyframe array for storing keyframe elements, wherein each keyframe element comprises a bead color and the number of consecutive occurrences of that color.

The animation generator retrieves the sequence of colors that the bead graphics are to display and the number of consecutive times each color is to appear. Based on this, it constructs a set of keyframe elements. Each light bead graphic then displays different colors according to the keyframe elements in the array. The duration for which a bead color remains visible is determined by the number of consecutive occurrences specified in its corresponding keyframe element.

For example, a keyframe array may include the following keyframe elements: (redColor, 10), (greenColor, 10), and (blueColor, 10). The keyframe element (redColor, 10) indicates that the string light graphic continuously displays red-colored beads 10 times. According to this keyframe array, the light bead graphics sequentially produce the following animation effect: the bead graphics display red color 10 times, followed by green 10 times, and finally blue 10 times.

S23: The keyframe animation is configured with multiple keyframes respectively corresponding to the keyframe elements.

The animation generator assigns the keyframe array to the values property of the CAKeyframeAnimation object. The values property stores the collection of bead colors to be displayed by the light bead graphics. Each bead color in the sequence corresponds to one keyframe, ensuring that the bead graphics display different colors at different moments in time.

Specifically, step S23 comprises the following steps:
S231: Traversing the keyframe elements in the keyframe array to calculate the total number of color occurrences, and determining the total animation duration based on a preset per-frame duration and the total number of color occurrences.

By traversing the keyframe array, the total animation duration required for a full animation cycle of the bead graphics can be calculated. Intuitively, multiplying the total number of color displays by the preset per-color display duration yields the total animation duration. Therefore, adjusting the preset duration per bead color allows control over the playback speed of the marquee animation.

For example, if the keyframe array includes keyframe elements (redColor, 10), (greenColor, 10), (blueColor, 10), and the preset per-color duration is 0.1 seconds, then the total number of color displays is: 10 + 10 + 10 = 30 times. Thus, the total animation duration is: 30 ×0.1 = 3 seconds.

S232: Determining the keyframe corresponding to each keyframe element based on the number of consecutive color occurrences.

Each keyframe element in the keyframe array corresponds to one keyframe. The position of the keyframe in the animation timeline is calculated based on the ratio between the cumulative number of color displays and the total number of color changes. Specifically, when traversing the light bead graphics, the position of the keyframe for a given color is determined by: (cumulative occurrences of that color) ÷ (total occurrences of all colors). This ensures that the color transition of the bead graphics occurs precisely at the intended moment in the animation timeline, resulting in a smooth and seamless color transition.

For example, if the keyframe array contains (redColor, 10), (greenColor, 10), and (blueColor, 10), and the keyframe range is normalized from 0 to 1 (i.e., animation start is 0, and animation end is 1), then the calculated keyframe positions would be: Red color: 0 / 30 = 0; Green color: 10 / 30 = 0.333; Blue color: (10 + 10) / 30 = 0.666. Each light bead graphic changes its color at these corresponding keyframe positions in the animation timeline.

The marquee animation display method provided in this embodiment further comprises step S3: binding the light bead graphics to the keyframe animation and adding the string light graphic to the display view to present a marquee animation effect of the string light graphic.

In step S3 of this embodiment, each light bead graphic needs to be bound to the keyframe animation so that the string light graphic can be animated on the display view.

Step S3 specifically comprises the following steps:
S31: Adding the background graphic object to the display view to present the overall shape of the string light controlled by the string light control program; applying the keyframe animation to all of the light bead graphics.

In step S3, the background graphic object obtained in step S12 is first added to the "layer" of the display view. The background graphic object includes only a background image, without any other shapes or light bead graphics. By adding the background graphic object to the display view, the overall appearance of the string light graphic is rendered, providing visual context for the subsequent animation effect.

S32: Adding the string light graphic to the display view so that all the light bead graphics generate animation effects based on the keyframe animation.

This step comprises: traversing the light bead graphics that constitute the string light graphic and setting the animation start time for each light bead graphic based on its traversal index and the duration of each bead animation in the keyframe animation.

More specifically, step S32 comprises:
S321: Traversing the light bead graphic array.

The method allows the traversal order to be set according to the direction of the marquee animation. The light bead graphics that constitute the string light graphic are traversed in the specified order. For example, if the animation direction is set to forward, the light bead graphic array is traversed in ascending order; if the animation direction is set to reverse, the array is traversed in descending order, so that the last light bead in the array starts the animation first, achieving a reverse lighting effect.

S322: Setting the start time of the keyframe animation. For each light bead graphic object in the array, the "beginTime" property of the keyframe animation created in step S21 is set as follows: beginTime = CACurrentMediaTime()+i×preset bead animation duration, where "i" is the current traversal index (starting from 0).

The preset animation duration is used to create an offset between the start times of adjacent light bead animations. In this way, the animations of adjacent light bead graphics start at intervals, creating a sequential lighting effect across the string light graphic, thus forming a continuously moving marquee animation.

S323: Adding the keyframe animation to each light bead graphic object.

All light bead graphics in the string light graphic share the same keyframe animation and produce identical animation effects. However, the animation start time differs among them. This approach reduces both memory usage and performance consumption of the string light control program, as a single animation is reused for all bead graphics with minimal computational overhead.

S324: Adding the light bead graphic array to the "layer" of the display view. After this step is completed, all light bead graphics can be displayed on the display view. The color of each light bead graphic changes sequentially according to the settings of the keyframe animation, thereby presenting a marquee animation effect of the light string graphic.

In summary, the marquee animation display method provided by the present invention can generate multiple light bead graphics through a shape generator, and the light string graphic is formed by multiple light bead graphics. A unified animation effect is generated by an animation generator to simultaneously control the color changes of multiple light bead graphics, enabling the light string graphic to achieve a dynamic animation effect. Meanwhile, the method optimizes the performance of the light string control program, avoiding the runtime burden of calculating each light bead's animation effect in real time. This marquee animation control method provides a high-performance and customizable marquee animation effect that not only meets users' personalized demands for dynamic lighting effects but also reduces the performance consumption of the terminal device, thereby enhancing the overall user experience. Furthermore, the marquee animation display method can improve the display efficiency and smoothness of the marquee animation, further reduce the performance consumption of the terminal device running the string light control program, and enhance the user experience.

The above description is only an embodiment of the present invention and does not limit the scope of the patent. Any equivalent transformations made based on the specification and drawings of the present invention, or any direct or indirect applications in related technical fields, shall be included within the protection scope of the present invention.

## Claims

1. A marquee animation display method for a string light control program, **characterized by** comprising the following steps:
S1: Generating, by a shape generator, a plurality of light bead graphics, wherein the plurality of light bead graphics form a string light graphic;
S2: Generating, by an animation generator, a keyframe animation;
S3: Binding the light bead graphics to the keyframe animation, and adding the string light graphic to a display view to display a marquee animation effect of the string light graphic;
In step S2, generating the keyframe animation by the animation generator, specifically comprising the following steps:
S21: Creating the keyframe animation wherein a key path is set to "fillColor" to control color changes of the light bead graphics;
S22: Creating a keyframe array for storing keyframe elements, wherein each keyframe element comprises a light bead color and the number of consecutive occurrences of that color;
S23: Setting the keyframe animation with a plurality of keyframes, respectively corresponding to the keyframe elements.

2. The marquee animation display method according to claim 1, **characterized in that**, in step S1, a plurality of light bead graphics are generated by the shape generator to form a string light graphic, specifically comprising the following steps:
S11: Acquiring preset graphic data;
S12: Generating, based on the preset graphic data, a plurality of light bead graphic objects respectively corresponding to the plurality of light bead graphics, and storing the light bead graphics in a light bead graphic array.

3. The marquee animation display method according to claim 2, **characterized in that** the preset graphic data comprises a plurality of light bead parameters corresponding one-to-one to the plurality of light bead graphics, wherein the light bead parameters include a light bead position parameter and a light bead graphic parameter;
In step S12, generating the plurality of light bead graphic objects based on the preset graphic data and storing them in the light bead graphic array, specifically comprising:
S121: Creating the light bead graphic array;
S122: Acquiring a scaling factor based on the size of the view in the preset graphic data and the size of the display view;
S123: Traversing the light bead parameters, generating light bead graphic objects based on the scaling factor and the light bead parameters, and storing the light bead graphic objects in the light bead graphic array.

4. The marquee animation display method according to claim 2, **characterized in that** the preset graphic data further comprises background parameters;
Step S1 further comprises the step: generating a background graphic object based on the background parameters;
Step S3 further comprises the step: adding the background graphic object to the display view to display the overall shape of the string light controlled by the string light control program in the display view.

5. The marquee animation display method according to claim 1, **characterized in that**, in step S23, the keyframe animation setting comprises a plurality of keyframes respectively corresponding one-to-one to a plurality of keyframe elements, specifically comprising:
S231: Traversing the keyframe elements in the keyframe array to acquire the total number of occurrences of bead colors, and calculating the total animation duration based on a preset bead animation duration and the total number of occurrences;
S232: Acquiring the keyframe corresponding to each keyframe element based on the number of consecutive occurrences of the bead color.

6. The marquee animation display method according to claim 1, **characterized in that**, in step S3, the light bead graphics are bound to the keyframe animation, and the string light graphic is added to the display view to display the marquee animation effect of the string light graphic, specifically comprising the following steps:
S31: Applying the keyframe animation to all the light bead graphics;
S32: Adding the string light graphic to the display view, wherein all the light bead graphics animate based on the keyframe animation.

7. The marquee animation display method according to claim 6, **characterized in that**, in step S31, animation effects are added to all the light bead graphics based on the keyframe animation, specifically comprising:
Traversing the light bead graphics forming the string light graphic, and setting an animation start time for each traversed light bead graphic according to its traversal index and the bead animation duration in the keyframe animation.

8. The marquee animation display method according to claim 7, **characterized in that**, in step S31, animation effects are added to all of the light bead graphics based on the keyframe animation, and this step further comprises: setting a traversal order according to the direction of the marquee animation, and traversing the light bead graphics constituting the string light graphic according to the traversal order.

9. The marquee animation display method according to claim 6, **characterized in that**, Step S32 comprises
S321: Traversing the light bead graphic array;
S322: Setting the start time of the keyframe animation. For each light bead graphic object in the array, the "beginTime" property of the keyframe animation created in step S21 is set as follows: beginTime = CACurrentMediaTime()+i×preset bead animation duration, where "i" is the current traversal index starting from 0;
S323: Adding the keyframe animation to each light bead graphic object;
S324: Adding the light bead graphic array to the "layer" of the display view. After this step is completed, all light bead graphics can be displayed on the display view. The color of each light bead graphic changes sequentially according to the settings of the keyframe animation, thereby presenting a marquee animation effect of the light string graphic.

10. A string light control terminal, comprises a memory, a processor, and a string light control program stored in the memory and executable on the processor, **characterized in that** when executing the string light control program, the processor implements the marquee animation display method according to any one of claims 1 to 9, which comprises the following steps:
S1: Generating, by a shape generator, a plurality of light bead graphics, wherein the plurality of light bead graphics form a string light graphic;
S2: Generating, by an animation generator, a keyframe animation;
S3: Binding the light bead graphics to the keyframe animation, and adding the string light graphic to a display view to present a marquee animation effect.

11. The string light control terminal according to claim 10, **characterized in that**, in step S2, the animation generator generates keyframe animation, specifically comprising the following steps:
S21: Creating the keyframe animation with a key path set to "fillColor" to control color changes of the light bead graphics;
S22: Creating a keyframe array for storing keyframe elements, wherein the keyframe elements comprise bead colors and the number of consecutive occurrences of the bead colors;
S23: Setting the keyframe animation with a plurality of keyframes respectively corresponding to the plurality of keyframe elements.
